# EUROPÄISCHE PATENTSCHRIFT

(11) **EP 1 096 119 B1**
(45) Veröffentlichungstag und Bekanntmachung des Hinweises auf die Patenterteilung: **10.12.2003**
(21) Anmeldenummer: 00121262.0
(22) Anmeldetag: 05.10.2000
(51) Int. Cl.: F02B 27/02, F02B 31/08, F02D 9/10

(54) **Schalteinheit**
Switching unit
Unité de commutation

(30) Priorität: 26.10.1999 DE 19951412
(43) Veröffentlichungstag der Anmeldung: 02.05.2001
(73) Patentinhaber: FILTERWERK MANN + HUMMEL GMBH, 71638 Ludwigsburg (DE)
(72) Erfinder: Ludmann, Armin, 70839 Gerlingen (DE); Jessberger, Thomas, 71277 Rutesheim (DE); Neuschwander, Helmut, 71636 Ludwigsburg (DE)
(74) Vertreter: Voth, Gerhard, Dipl.-Ing.

(56) Entgegenhaltungen:
- EP-A- 0 701 057
- EP-A- 0 725 210
- EP-A- 0 824 185
- WO-A-98/42969
- US-A- 4 850 796

## Beschreibung

### Stand der Technik

Die Erfindung betrifft ein Ansaugsystem einer Brennkraftmaschine nach dem Oberbegriff des Patentanspruches 1.

Bekanntlich wird in einem Ansaugsystem einer Brennkraftmaschine zu Beginn jedes Ansaughubes eine Unterdruckwelle erzeugt, welche in dem Ansaugsystem stromaufwärts läuft. An einem, zur Atmosphäre oder zu einem in der Aufstromseite des Ansaugsystems vorgesehenen Pufferbehälter hin offenen Ende, wird diese Unterdruckwelle als positive Druckwelle reflektiert und läuft zur Einlaßöffnung im Zylinder zurück. Durch eine Gestaltung des Ansaugsystems so, daß diese positive Druckwelle die Einlaßöffnung unmittelbar vor dem Schließen des Einlaßventils erreicht, wird die Ansaugluft verstärkt in den Brennraum gedrückt, wodurch der Füllgrad der Zylinder verbessert wird. Da sich die Druckwelle mit einer bestimmten Geschwindigkeit bewegt, kann sie bei einem unveränderlichen Ansaugsystem nur in einem bestimmten Drehzahlbereich eine optimale Aufladung bewirken. Um in mehreren Bereichen eine gute Aufladung zu erzielen, werden mehrere Einzel-Ansaugleitungen, die durch ein Ventil zu- bzw. abgeschaltet werden können, verwendet. Durch verschiedene Saugrohrlängen werden unterschiedliche Laufwege der Druckwelle erzeugt.

Die EP 0 701 057 zeigt ein Ansaugsystem einer Brennkraftmaschine mit mehreren nebeneinander angeordneten Einlaßkanälen und einer Schalteinheit zur Kanalabschaltung der Einlaßkanäle. Das Ansaugsystem verfügt übergeschaltete und nicht geschaltete Strömungsquerschnitte. Die geschalteten Strömungsquerschnitte können mit jeweils einer Klappe verschlossen werden. Hierzu sind die Klappen mit einer einzigen Bewegungseinheit verbunden, welche außerhalb der nicht geschalteten Strömungsquerschnitte verläuft.

Aus der DE 195 04 382 ist eine Schalteinheit für ein Ansaugsystem mit mehreren nebeneinander angeordneten Einlaßkanälen einer Brennkraftmaschine bekannt, die zwei Einlaßkanäle für jeden Zylinder aufweist, wobei ein Kanal mit einer Klappe verschlossen werden kann, der andere Kanal ist immer geöffnet. Die Klappen der verschließbaren Einlaßkanäle sind auf einer Welle aufgebracht, welche über einen Antrieb bewegbar ist. Alle Klappen der Schalteinheit sind auf derselben Welle aufgebracht, wodurch die Welle jeden Einlaßkanal schneidet, auch die nicht geschalteten Kanäle. Hierbei können Leckageströme zwischen den geschalteten und den nicht geschalteten Einlaßkanälen auftreten, welche den Aufladeeffekt durch die Unterdruckwelle stören. Ein weiterer Nachteil dieser Anordnung liegt darin, daß die Welle in den nicht geschalteten Kanälen eine Störkontur bildet, wodurch die Luftströmung gestört wird und Turbulenzen entstehen, die den Füllgrad der Zylinder verringern.

Die Aufgabe der Erfindung besteht darin, ein Ansaugsystem mit einer Schalteinheit zur Kanalabschaltung von Ansaugkanälen zu schaffen, die keine Leckage zwischen den geschalteten und den nicht geschalteten Strömungsquerschnitten zuläßt und weiterhin Störkonturen in den nicht geschalteten Strömungsquerschnitten vermeidet.

Diese Aufgabe wird durch die Merkmale des Patentanspruches 1 gelöst.

### Vorteile der Erfindung

Das erfindungsgemäße Ansaugsystem mit mehreren nebeneinander angeordneten Einlaßkanälen einer Brennkraftmaschine ist in vorteilhafter Weise geeignet, mehrere Strömungsquerschnitte mit einer Schalteinheit zu verschließen und bei Bedarf zu öffnen, wobei im geschlossenen Zustand keine Leckage zwischen den nebeneinander angeordneten Strömungsquerschnitten auftritt, und die nicht geschalteten Strömungsquerschnitte keine, durch die Bewegungseinheit verursachten, Störkonturen aufweisen. Die Einlaßkanäle des Ansaugsystems können einteilig ausgeführt, oder aus mehreren Gehäuseteilen zusammengesetzt sein. Bei der mehrteiligen Ausführung können die Gehäuseteile z.B. miteinander verschweißt oder verschraubt sein.

Die Schalteinheit ist ein Bereich des Ansaugsystems, die mindestens über zwei geschaltete und nicht geschaltete Strömungsquerschnitte, Klappen und eine Bewegungseinheit verfügt. Die geschalteten Strömungsquerschnitte sind die Bereiche der Einlaßkanäle, in denen sich Klappen befinden und die nicht geschalteten Strömungsquerschnitte sind die Bereiche der Einlaßkanäle, die in der Höhe der geschalteten Strömungsquerschnitte liegen, aber keine Klappen aufweisen. Zur Bewegung aller Klappen, dient eine einzige Bewegungseinheit. Diese Bewegungseinheit kann z.B. durch eine einzelne Welle oder mehreren Klappenwellen mit einem Antrieb gebildet werden. Dabei werden die Teile der Bewegungseinheit stets aus dem geschalteten Strömungsquerschnitt herausgeführt und außerhalb dieser Strömungsquerschnitte bewegt. Die nicht geschalteten Strömungsquerschnitte weisen an keiner Stelle eine Berührung mit der Bewegungseinheit auf, wodurch keine Verbindung zwischen den geschalteten und den nicht geschalteten Strömungsquerschnitten besteht und somit keine Leckage auftreten kann. Um eine Leckage zwischen den geschalteten Strömungsquerschnitten zu verhindern, sind in diesen Verbindungsstellen abzudichten, was z.B. mit einer Dichtung erfolgen kann.

Eine vorteilhafte Ausbildung der Erfindung stellt die mehrteilige Ausführung der Klappe dar. Hierbei weist die Klappe mindestens zwei, voneinander getrennte, Klappenteile auf, die jeweils auf einer separaten Klappenwelle aufgebracht sind. Die Klappenwelle kann dabei z.B. in einem Randbereich der Klappenteile liegen, oder mittig angeordnet sein. Bei einer mittigen Anordnung der Klappenwelle befinden sich die Klappenwelle und die Klappenteile im geschlossenen, sowie geöffneten Zustand in dem geschalteten Strömungsquerschnitt. Bei einer Anordnung der Klappenwelle in den Randbereichen, können die Klappenteile strömungstechnisch vorteilhaft ausgebildet sein, so daß die Klappenteile, die in dem geschalteten Strömungsquerschnitt verbleiben, eine möglichst geringe Luftverwirbelung verursachen. Mögliche Varianten stellen hierbei Wölbungen dar, die den geschalteten Strömungsquerschnitt verengen und wieder erweitern, ohne daß die Stromlinien wesentlich verändert werden, oder abreißen.

Eine besondere Ausführungsform der Erfindung sieht eine Koppelung der Klappenwellen miteinander vor. Die Koppelung der Klappenwellen kann durch ein mechanisches Getriebe erfolgen, welches direkt mit den Klappenwellen verbunden ist, oder durch eine elektronische Steuerung von Motoren, welche die Klappenwellen antreibt. Die Klappenwellen können gleich- oder gegensinnig bewegt werden. Bei einer gegenläufigen Drehbewegung der Klappenwellen, sind nur in einem Bereich des Ansaugkanals Aufnahmen für die Klappenteile vorzusehen, wodurch die Fertigung des Ansaugkanals vereinfacht wird. Bei der gleichläufigen Drehbewegung der Klappenwellen wird eine Kompensation der auftretenden Kräfte erzielt, da ein Klappenteil nach unten und das andere Klappenteil nach oben schwenkt.

Eine besondere Ausführungsform besteht darin, die Klappenteile und deren Bewegungseinheiten in geöffnetem Zustand aus dem Strömungsquerschnitt zu entfernen, um dadurch ein besseres Strömungsverhalten zu erzielen. Die Klappenteile können aus dem Strömungskanal herausgezogen oder -gedreht werden. Beim Herausziehen der Klappenteile aus dem geschalteten Strömungsquerschnitt, ist darauf zu achten, daß keine Leckage entsteht. Dies kann durch exakte Toleranzen erreicht werden. Eine weitere Möglichkeit, die Klappe aus dem Strömungsquerschnitt zu entfernen, ist das Drehen der Klappenteile in hierfür vorgesehene Aufnahmen im Strömungskanal. Dadurch werden Störkonturen in, und Leckageströme zwischen den geschalteten Strömungsquerschnitten vermieden.

Gemäß einer weiteren Ausgestaltung der Erfindung sind Dichtflächen an der Klappe vorgesehen. Die Dichtflächen können sowohl die Klappe gegen den Strömungsquerschnitt, als auch die Klappenteile untereinander abdichten. Sie können durch glatte oder geometrisch abgesetzte Flächen eine Abdichtung wie z.B. eine Labyrinthdichtung erzeugen. Eine weitere Möglichkeit, Dichtflächen zu erzeugen, besteht darin, dichtendes Material auf die Klappe aufzubringen. Die Dichtflächen sind so gestaltet, daß sie den Strömungskanal dem jeweiligen Zustand entsprechend abdichten. Im geschlossenen Zustand dichtet die Klappe den Strömungsquerschnitt und im geöffneten Zustand die Wand des Einlaßkanals ab. Die Verwendung von Dichtungen an den Dichtflächen ist eine weitere Möglichkeit, die Dichtheit der Klappe in dem Strömungsquerschnitt zu erzeugen.

Eine besondere Ausführungsform der Erfindung sieht eine versetzte Anordnung der geschalteten zu den nicht geschalteten Strömungsquerschnitten vor. Hierbei können alle geschalteten Strömungsquerschnitte auf einer Achse liegen, wodurch die Klappen auf einer durchgängigen Welle befestigt werden können und somit alle Klappen synchron bewegt werden. Hierbei ist für die Welle ein torsionssteifes Material, wie z.B. Aluminium zu wählen. Die nicht geschalteten Strömungsquerschnitte können ebenfalls auf einer Achse liegen, wobei jedoch auf eine ausreichende Entfernung der Kanalwand von der Bewegungseinheit zu achten ist, um dadurch keine Störkonturen im nicht geschalteten Kanal zu erhalten oder die Kanalwand zu sehr zu schwächen, so daß im Betrieb die Kanalwand durchbricht.

Da die Einlaßöffnungen am Zylinderkopf üblicherweise in einer Reihe angeordnet sind, ist es vorteilhaft, je einen geschalteten und einen nicht geschalteten Strömungsquerschnitt für einen Zylinder vorzusehen und diese vor dem Zylinder in einer, auf einer Achse liegenden Reihe zusammenzuführen. Die Zusammenführung der beiden Strömungsquerschnitte in einer Reihe vor dem Zylinderkopf ist eine bauraumoptimale Variante, die eine einfache Schaltung der Klappen mit einer Welle erlauben, ohne daß die Luftströmung in den nicht geschalteten Strömungsquerschnitten durch Störkonturen beeinträchtigt wird.

Eine vorteilhafte Ausbildung des Erfindungsgedankens stellt die Bewegung der Klappe mit einem Getriebe dar. Das Getriebe ist dann Teil der Bewegungseinheit. Bei einteilig ausgeführten Klappen, die z.B. auf einer einzigen Welle angeordnet sind, kann die Welle mit dem Getriebe bewegt werden, wodurch spezielle Klappenstellungen oder -bewegungen erzielt werden. Bei mehrteilig ausgeführten Klappen, sind die einzelnen Klappenteile durch das Getriebe verbunden. Dadurch können die Klappenteile über das Getriebe mit einem einzigen Antrieb bewegt werden. Die Klappenwellen können in einem vorgegebenen Übersetzungsverhältnis betrieben werden. Durch ein Übersetzungsverhältnis ungleich 1:1 können Strömungsvarianten erzeugt werden, indem ein Klappenteil schneller bzw. weiter öffnet, als das andere Klappenteil. Desweiteren sind auch Getriebe denkbar, welche die Klappen translatorisch bewegen, wodurch die Klappen aus dem Strömungsquerschnitt entfernt werden. Hierbei können Zahn- oder Hebelgetriebe verwendet werden.

Gemäß einer weiteren Ausgestaltung der Erfindung, kann die Klappe in einen Stutzen eingebracht werden, der den geschalteten Strömungsquerschnitt umschließt. Dieser Stutzen ist so ausgebildet, daß er als vormontierte Einheit in das Ansaugsystem eingebracht werden kann, und somit die Klappe als Ventil den Strömungskanal verschließen bzw. öffnen kann. Bei besonderen Ausführungen des Stutzens, kann er das gesamte Schaltelement bilden, welches als vormontiertes Modul in das Ansaugsystem eingebracht wird.

Es ist besonders vorteilhaft, die Klappenteile und den Stutzen in Montagespritzgußtechnik herzustellen, wodurch die Vorteile der Montagespritzgußtechnik genutzt und geringe Toleranzen und optimale Paßform realisiert werden können und somit nahezu keine Leckage auftritt.

Eine besondere Ausführungsform der Erfindung sieht die Verwendung der Schalteinheit in einem, im wesentlichen rechteckförmigen Strömungskanal vor. Hierbei kann die Lagerung der Klappen durch angeformte Lagerzapfen oder durch eine eingebrachte Achse in den Randbereichen erfolgen. Beim Öffnen der Klappe können die Klappenteile in die dafür vorgesehenen Aufnahmen an der Wand des Strömungskanals gedreht werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden in den Zeichnungen anhand von schematischen Ausführungsbeispielen beschrieben.

Hierbei zeigt
- Figur 1: eine geschlossene gegenläufige Schalteinheit in Schnitt,
- Figur 2: eine geöffnete gegenläufige Schalteinheit im Schnitt,
- Figur 3: eine geschlossene gleichläufige Schalteinheit im Schnitt,
- Figur 4: eine schematisch dargestellte Bewegungseinheit,
- Figur 5: eine Schalteinheit im Schnitt mit versetzt angeordneten Kanälen und
- Figur 6: eine Schalteinheit im Schnitt.

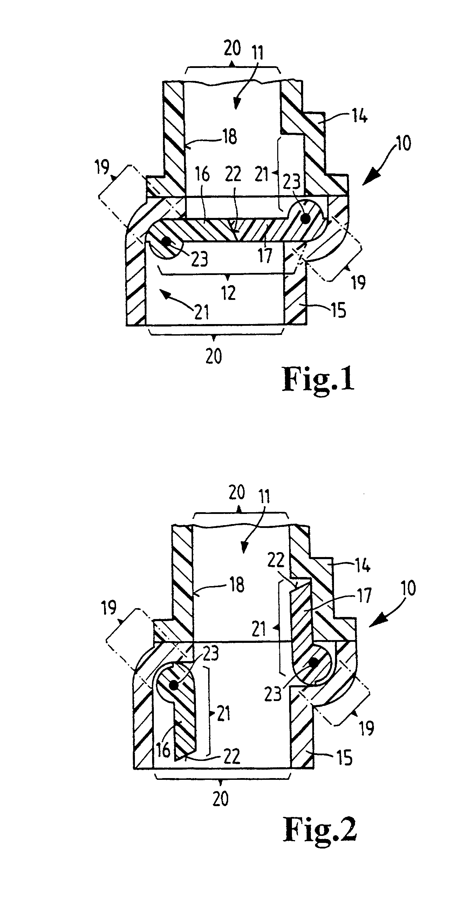

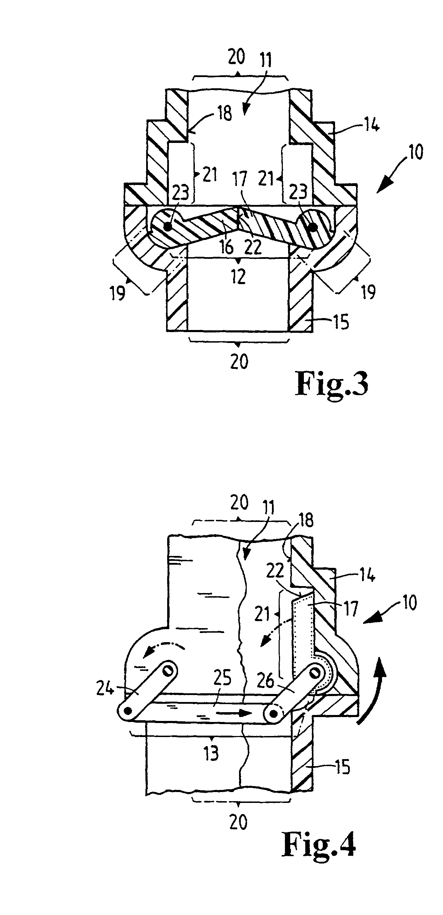

In Figur 1 ist eine Schalteinheit 10 im Schnitt durch einen Einlaßkanal 11 dargestellt, wobei in einem Ansaugsystem mehrere Einlaßkanäle 11 nebeneinander angeordnet sind (hier nicht dargestellt). Im wesentlichen weist diese Schalteinheit 10 rechteckförmige Einlaßkanäle 11, Klappen 12, Klappenwellen 23 und eine Bewegungseinheit 13 (nicht dargestellt, siehe Figur 4) auf. Der Einlaßkanal 11 wird aus einem oberen und einem unteren Kanalstück 14, 15 gebildet. Die Klappe 12 wird durch ein erstes und ein zweites Klappenteil 16, 17 gebildet, welche in den Einlaßkanal 11 eingebracht sind. Bei dieser Abbildung ist der geschlossene Zustand dargestellt. Die Kanalstücke 14, 15 weisen je eine, am Umfang einstückige Wand 18 auf, die Lager- und Dichtstellen 19 für die Klappenteile 16, 17 besitzt und welche einen rechteckförmigen Strömungsquerschnitt 20 umschließt, welcher von der Klappe 12 verschlossen oder freigegeben wird. Die Wand 18 des Einlaßkanals 11 besitzt Aufnahmen 21, in welche die Klappenteile 16, 17 geschwenkt werden können, um keine Störkonturen im Strömungsquerschnitt 20 darzustellen. Die Schalteinheit 10 ist so ausgeführt, daß sich die Klappenteile 16, 17 im Einlaßkanal 11 bei geschlossener Stellung dichtend berühren, hierzu weisen die Klappenteile 16, 17 angeschrägte Dichtflächen 22 auf. Die Klappenteile 16, 17 sind so in die Lagerund Dichtstellen 19 der Kanalstücke 14, 15 eingebracht, daß in diesen Bereichen keine Leckageströme auftreten.

In Figur 2 ist die Schalteinheit 10 gemäß Figur 1 im Schnitt bei geöffneter Stellung dargestellt. Hierbei sind die Klappenteile 16, 17 in die dafür vorgesehenen Aufnahmen 21 durch eine gleichläufige Drehung hineingedreht und liegen an der Wand 18 an. Dadurch befinden sich keine Störkonturen im Strömungsquerschnitt 20, die den Verlauf der Stromlinien beeinträchtigen.

In Figur 3 ist die Schalteinheit 10 mit gegenläufig drehenden Klappenteilen 16, 17 im Schnitt durch einen Einlaßkanal 11 dargestellt. Bei dieser Ausführung sind die Aufnahmen 21 für die Klappenteile 16, 17 nur im oberen Kanalstück 14 untergebracht. Die Lager- und Dichtstellen 19 der Klappenteile 16, 17 dagegen befinden sich in dem unteren Kanalstück 15. Bei dieser Ausführung sind die Klappenteile 16, 17 so ausgelegt, daß die Klappenteile 16, 17 sich selbst sichern. Wenn die Klappe 12 geschlossen ist, wirkt ein Umgebungsdruck auf die Klappenteile 16, 17, der diese noch mehr zusammendrückt und so eine bessere Dichtheit der Klappe 12 bewirkt. Beim Öffnen der Klappe 12 werden die Klappenteile 16, 17 in gegenläufiger Drehrichtung bewegt und an der Wand 18 angelegt. Dadurch verbleiben keine Störkonturen im Strömungsquerschnitt 20.

In Figur 4 ist eine Bewegungseinheit 13 im Halbschnitt dargestellt, die eine gegeneinander verlaufende Bewegung der Klappenteile 16, 17, durch die gleichläufige Drehrichtung der Klappenwellen, bewirkt (ähnlich Figur 2). Die Klappenteile 16, 17 sind in den Lagerund Dichtstellen 19 drehbar gelagert und mit Hebeln 24, 25, 26 verbunden. Die Bewegungseinheit 13 enthält einen kurzen linken Hebelarm 24, einen langen Hebelarm 25 und einen kurzen rechten Hebelarm 26. Der linke Hebelarm 24 ist mit dem ersten Klappenteil 16 und der rechte Hebelarm 26 ist mit dem zweiten Klappenteil 17 verbunden. Die beiden Hebelarme 24, 26 sind durch den langen Hebelarm 25 verbunden. Die Verbindung der Hebelarme 24, 25, 26 ist so ausgelegt, daß sie sich rotatorisch zueinander bewegen können. Durch Antreiben der Bewegungseinheit 13 entgegen dem Uhrzeigersinn, drehen sich das erste und zweite Klappenteil 16, 17 entgegen dem Uhrzeigersinn. Durch diese Bewegung können die Klappenteile 16, 17 entweder den Strömungskanal 11 verschließen oder durch Anlegen an die Wand 18, den Strömungskanal 11 freigeben. Da sich die Klappenteile 16, 17 aufeinander zu bzw. weg bewegen, werden die, durch die Rotation entstehenden Kräfte kompensiert.

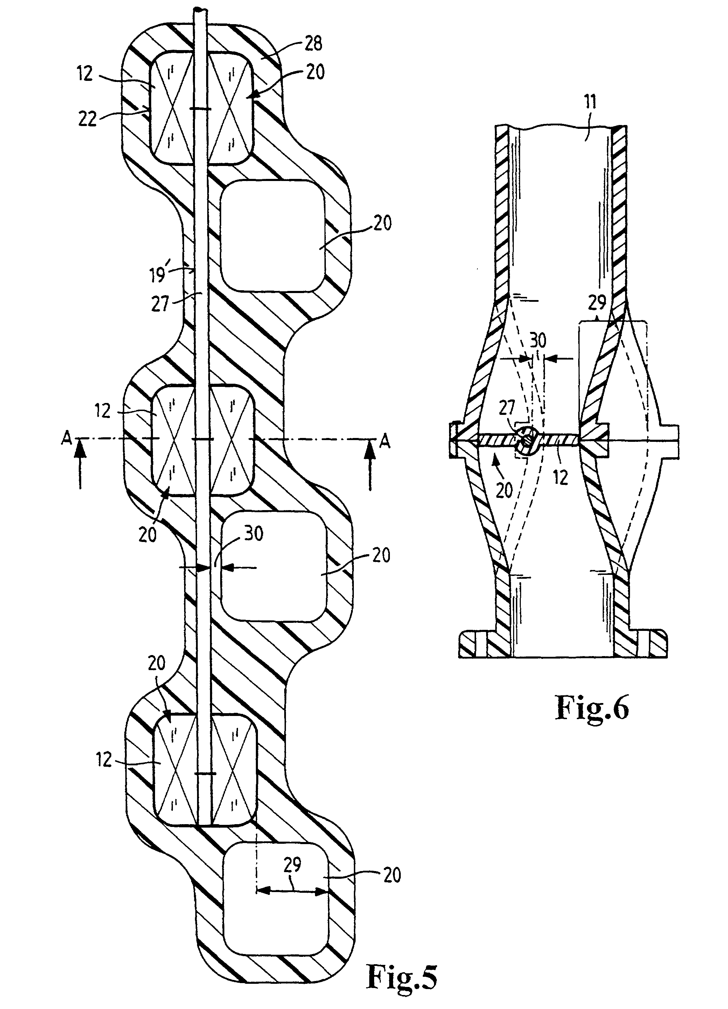

In Figur 5 ist ein Ausschnitt aus einem Ansaugsystem im Schnitt dargestellt, das versetzt zueinander angeordnete Strömungsquerschnitte 20 aufweist. Die Klappen 12 der geschalteten Strömungsquerschnitte 20 sind auf einer einzigen, durchgängigen Welle 27 befestigt. Hierzu ist die Welle 27 in die Lagerstellen 19' eines einteilig ausgeführten Gehäuses 28, das z.B. in Gießtechnik hergestellt ist, eingeschoben. Anschließend werden die Klappen 12 durch z.B. Laserschweißen auf der Welle 27 befestigt. Die Klappen 12 können aber auch durch Nieten oder Schrauben auf der Welle 27 befestigt werden. Die Lagerstellen 19' sind so ausgelegt, daß keine Leckage zwischen den geschalteten Strömungsquerschnitten 20 entsteht. Bei diversen Ausführungen sind in diesen Bereichen Dichtungen auf der Welle 27 aufgebracht. Die nicht geschalteten Strömungsquerschnitte 20 weisen keine, durch die Welle 27 oder Klappen 12 erzeugten Störkonturen auf. Die versetzt angeordneten Strömungsquerschnitte 20 können in der versetzten Ausführung ohne Zusammenführung zu den Zylindern geführt werden. Hierbei ist dann eine Anpassung des Zylinderkopfflansches an das Ansaugsystem erforderlich.

In Figur 6 ist die Schalteinheit im Schnitt entlang der Schnittlinie A-A gemäß Figur 5 dargestellt. Der Schnitt verläuft entlang eines Einlaßkanals 11 mit versetzt angeordneten geschalteten Strömungsquerschnitten 20. Bei dieser Ausführung teilen sich die zunächst parallel verlaufenden Einlaßkanäle 11 im Bereich der Klappen 12 in eine versetzte Anordnung auf. Im Bereich der Klappen 12 besteht der größte Versatz 29 zwischen den geschalteten und den nicht geschalteten Strömungsquerschnitten 20. Der Versatz 29 der Strömungsquerschnitte 20 wird gerade so groß gewählt, daß die Welle 27 an dem nicht geschalteten Strömungsquerschnitt 20 vorbeigeführt wird, ohne diesen zu schneiden, wobei jedoch auf eine ausreichende Wandstärke 30 geachtet werden muß, um ein Durchbrechen der Welle 27 im Betrieb zu vermeiden. Die Einlaßkanäle 11 werden nach dem Bereich der Klappen 12 wieder parallel zusammengeführt, wobei keine Anpassung des Zylinderkopfflansches erforderlich ist. Der Übergang von den parallel angeordneten Einlaßkanälen 11 zu der versetzten Anordnung erfolgt in strömungsoptimierten Bögen, wodurch die Stromlinien der Luft fast nicht beeinflußt werden.

## Patentansprüche

1. Ansaugsystem einer Brennkraftmaschine mit mehreren nebeneinander angeordneten Einlasskanälen (11) und Schalteinheit (10) zur Kanalabschaltung der Einlasskanäle (11) einer Brennkraftmaschine, welches mindestens über zwei geschaltete und einen nicht geschalteten Strömungsquerschnitt (20) verfügt und wobei die geschalteten Strömungsquerschnitte (20) mit jeweils einer Klappe (12) versehen sind und durch eine einzige Bewegungseinheit öffen- und schließbar sind, wobei die Bewegungseinheit außerhalb des nicht geschalteten Strömungsquerschnittes (20) verläuft, **dadurch gekennzeichnet, daß** die Klappe (12) mindestens zwei voneinander getrennte Klappenteile (16, 17) aufweist, die auf je einer Klappenwelle (23) aufgebracht sind, wobei sich die Klappenteile im Einlaßkanal bei geschlossener Stellung dichtend berühren.

2. Ansaugsystem nach Anspruch 1 **dadurch gekennzeichnet, daß** die Klappenwellen (23) hinsichtlich der Klappenstellung miteinander gekoppelt sind.

3. Ansaugsystem nach einem der vorangehenden Ansprüche, **dadurch gekennzeichnet, daß** sich die Klappe (12) im geöffneten Zustand außerhalb des Strömungsquerschnittes (20) befindet.

4. Ansaugsystem nach einem der vorangehenden Ansprüche, **dadurch gekennzeichnet, daß** die Klappe (12) Dichtflächen (22) aufweist

5. Ansaugsystem nach einem der vorangehenden Ansprüche, **dadurch gekennzeichnet, daß** die geschalteten Strömungsquerschnitte (20) zu den nicht geschalteten Strömungsquerschnitten (20) versetzt angeordnet sind.

6. Ansaugsystem nach Anspruch 5, **dadurch gekennzeichnet, daß** je ein geschalteter und ein nicht geschalteter Strömungsquerschnitt (20) für je einen Zylinder vorgesehen sind.

7. Ansaugsystem nach einem der vorangehenden Ansprüche, **dadurch gekennzeichnet, daß** die Klappe (12) durch ein Getriebe, welches Teil der Bewegungseinheit ist, bewegbar ist.

8. Ansaugsystem nach einem der vorangehenden Ansprüche, **dadurch gekennzeichnet, daß** die Klappe (12) in einen Stutzen eingebracht ist, wobei der Stutzen den Strömungsquerschnitt (20) umschließt und in das Ansaugsystem einbringbar ist.

9. Ansaugsystem nach Anspruch 8, **dadurch gekennzeichnet, daß** die Klappe (12) und der Stutzen in Montagespritzguß hergestellt ist.

10. Ansaugsystem nach einem der vorangehenden Ansprüche, **dadurch gekennzeichnet, daß** die Klappe (12) in einen, im wesentlichen rechteckförmigen, Strömungsquerschnitt (20) eingebracht ist.

## Claims

1. Induction system for an internal combustion engine, having a plurality of inlet ducts (11), which are disposed adjacent one another, and a switching unit (10) for switching off the inlet ducts (11) of an internal combustion engine, which system has at least two switched flow cross-sections (20) and one unswitched flow cross-section (20), and wherein the switched flow cross-sections (20) are each provided with a flap (12) and are openable and closable by a single displacement unit, the displacement unit extending externally of the unswitched flow cross-section (20), **characterised in that** the flap (12) has at least two flap parts (16, 17), which are separated from each other and are each placed on a respective flap shaft (23), the flap parts being in sealing contact in the inlet duct in the closed position.

2. Induction system according to claim 1, **characterised in that** the flap shafts (23) are interconnected in respect of the flap position.

3. Induction system according to one of the preceding claims, **characterised in that** the flap (12) is situated externally of the flow cross-section (20) in its open state.

4. Induction system according to one of the preceding claims, **characterised in that** the flap (12) has sealing surfaces (22).

5. Induction system according to one of the preceding claims, **characterised in that** the switched flow cross-sections (20) are disposed in an offset manner relative to the unswitched flow cross-sections (20).

6. Induction system according to claim 5, **characterised in that** one switched flow cross-section (20) and one unswitched flow cross-section (20) are respectively provided for each cylinder.

7. Induction system according to one of the preceding claims, **characterised in that** the flap (12) is displaceable by means of a transmission mechanism which is part of the displacement unit.

8. Induction system according to one of the preceding claims, **characterised in that** the flap (12) is introduced into a pipe, the pipe surrounding the flow cross-section (20) and being insertable into the induction system.

9. Induction system according to claim 8, **characterised in that** the flap (12) and the pipe are produced by an injection moulding assembly process.

10. Induction system according to one of the preceding claims, **characterised in that** the flap (12) is introduced into a substantially rectangular flow cross-section (20).

## Revendications

1. Système d'aspiration pour un moteur à combustion interne comportant plusieurs canaux d'admission (11) juxtaposés et une unité de commutation (10) pour couper l'un des canaux d'admission (11) d'un moteur à combustion interne ayant au moins plus de deux sections d'écoulement (20) commutées et une non commutée, les sections d'écoulement (20) commutées étant munies chacune d'un volet (12) dont une unique unité de déplacement assure l'ouverture et la fermeture, l'unité de déplacement passant à l'extérieur de la section d'écoulement (20) non commutée,
**caractérisé en ce que**
le volet (12) comporte au moins deux parties (16, 17) séparées l'une de l'autre prévues chacune sur un axe de volet (23), les parties de volet se touchant de manière étanche dans le canal d'entrée lorsque la position est fermée.

2. Système d'aspiration selon la revendication 1,
**caractérisé en ce que**
les axes (23) des volets sont couplés du point de vue de la position des volets.

3. Système d'aspiration selon l'une des revendications précédentes,
**caractérisé en ce qu'**
à l'état ouvert le volet (2) est en dehors de la section de passage (20).

4. Système d'aspiration selon l'une des revendications précédentes,
**caractérisé en ce que**
le volet (12) comporte des surfaces d'étanchéité (22).

5. Système d'aspiration selon l'une des revendications précédentes,
**caractérisé en ce que**
les sections d'écoulement commutées (20) sont décalées par rapport aux sections d'écoulement (20) non commutées.

6. Système d'aspiration selon la revendication 5,
**caractérisé en ce que**
pour chaque cylindre on a une section d'écoulement commutée et une section d'écoulement non commutée (20).

7. Système d'aspiration selon l'une des revendications précédentes,
**caractérisé en ce que**
le volet (12) est entraîné par une transmission qui fait partie de l'unité de déplacement.

8. Système d'aspiration selon l'une des revendications précédentes,
**caractérisé en ce que**
le volet (12) est logé dans un embout et cet embout entoure la section d'écoulement (20) et se place dans le système d'admission.

9. Système d'aspiration selon la revendication 8,
**caractérisé en ce que**
le volet (12) et l'embout sont fabriqués par injection de montage.

10. Système d'aspiration selon l'une des revendications précédentes,
**caractérisé en ce que**
le volet (12) est placé dans une section d'écoulement (20) essentiellement rectangulaire.
